# EUROPÄISCHE PATENTANMELDUNG

(11) **EP 1 162 476 A1**
(43) Veröffentlichungstag der Anmeldung: **12.12.2001**
(21) Anmeldenummer: 00890183.7
(22) Anmeldetag: 06.06.2000
(51) Int. Cl.: G01S 15/89, G01S 7/52

(54) **Verfahren zur Untersuchung von Objekten mit Ultraschall**

(71) Anmelder: Kretztechnik Aktiengesellschaft, 4871 Zipf (AT)
(72) Erfinder: Wiesauer, Franz, Dipl.-Ing., 4871 Zipf (AT)
(74) Vertreter: Hübscher, Gerhard, Dipl.-Ing.

(57) **Zusammenfassung**

Bei einem Verfahren zur Untersuchung von Objekten mit Ultraschall nach dem Reflexionsverfahren, insbesondere bei 3D-Abtastungen, wird das Objekt mit einer für eine Volumenabtastung geeigneten Schallkopfeinheit (1) mit zugeordneter Sende-Empfangseinheit (2, 4) abgetastet und die erhaltenen Echodaten werden in einem Volumenspeicher (5) in eindeutiger Zuordnung zu den Ortskoordinaten der Reflexionsstellen gespeichert. Bei der Abtastung wird die räumliche Liniendichte und/oder die zeitliche Wiederholungsfrequenz, in der bestimmte Volumensbereiche abgetastet werden, vom Inhalt der aus diesen Bereichen gewonnenen oder gewinnbaren Informationen in der Form abgeleitet, daß Bereiche mit geringerem Informationsgehalt seltener und bzw. oder mit geringerer Abtastdichte als Bereiche mit höherem Informationsgehalt abgetastet werden.

## Beschreibung

Die Erfindung betrifft ein Verfahren nach dem Oberbegriff des Patentanspruches 1.

Derartige Verfahren sind seit langem bekannt und z. B. in der AT 385 155 B dokumentiert. Es handelt sich dabei um eine Erweiterung der Ultraschall-Schnittbildaufnahme (B-Bild), bei der ein Schallstrahl in einer Ebene geschwenkt und so ein Schnittbild aufgenommen wird. Um die Information entlang eines idealisierten Strahles zu gewinnen, wird eine gebündelte Schallwelle ausgesendet, die bei ihrem Eindringen in das zu untersuchende Objekt von den Objektstrukturen teilweise reflektiert wird, so daß Echos entstehen, die nach der Laufzeit - diese bestimmt die Tiefenkoordinate - und nach der Amplitude, die beim B-Bildverfahren die Helligkeit bestimmt, ausgewertet werden. Bei dem ebenfalls bekannten Dopplerverfahren werden auch Frequenzveränderungen erfaßt und so z. B. die Strömungsrichtung oder Strömungsgeschwindigkeit in Blutgefäßen ermittelt. Die Summe aller berechneten Informationen sowie die Lageinformationen bei der Schwenkabtastung ergeben das Ultraschallbild. Die Abtasthäufigkeit, mit der ein bestimmter Teil des Objektes erneut abgetastet wird, ergibt sich aus der maximal gewünschten Eindringtiefe und der Anzahl der Abtastlinien pro Bild. Bei einer geforderten Eindringtiefe von 20 cm vergeht eine Zeit von ca 260 mikro-sec., bis Echos aus der maximalen Eindringtiefe am Schallkopf empfangen werden. Besteht ein Ultraschallbild aus 200 Abtaststrahlen, dann kann ein bestimmter Bereich ca 20 mal pro Sekunde abgetastet werden. Bei der 3D-Abtastung wird eine Schnittbildabtasteinheit zusätzlich unter Schwenkung oder Querverstellung über ein Volumen verstellt, so wird, wenn aus dem Volumen z. B. 200 im wesentlichen dem B-Bild in verschiedenen Lagen entsprechende Bilder gewonnen werden sollen, jeder Teil des Volumens bei dem obigen Beispiel nur noch einmal in 10 sec abgetastet, so daß sich lange Abtastzeiten zur eindeutigen Erfassung eines Volumens ergeben und bei bewegten Objekten Lageveränderungen in einem gegebenen Volumensbereich nur sprunghaft dargestellt werden können.

Es ist zur Vergrößerung der Abtastdichte bekannt, aus jeder ausgesendeten Ultraschallwelle mehrere Abtastlinien beim Empfang der Echos zu erzeugen, wobei üblicherweise vier Abtastlinien parallel geführt, für kardiologische Anwendungen aber auch mehr als vier Linien gleichzeitig geführt und verarbeitet werden können. Die Übertragung dieser Techniken auf dreidimensionale Abtastungen ist möglich, führt aber, aus dem obigen Beispiel ersichtlich ist, noch nicht zum vollen Erfolg.

Bei Abtastungen, die verschiedene Modalitäten kombinieren, z. B. ein B-Bild des Gewebes und Fardopplerdarstellung vom Blutfluß, wird das beim B-Bild an sich starre zeitliche und örtliche Schema der Abtastung modifiziert. Es wird mit einer Serie von Strahlen im B-Bild-Verfahren abgetastet und dann an anderer Stelle wieder mit einer Serie von Strahlen im Dopplerverfahren. Auch dieses Verfahren nimmt keine Rücksicht auf Bewegungen des Objektes und folgt einer zeitlichen und örtlichen Reihenfolge.

Demgemäß besteht die Aufgabe der Erfindung darin, ein neues Verfahren zu schaffen, das tatsächlich zu einer verbesserten Ausnützung der verwendeten oder aufzuwendenden Zeit bei Ultraschallabtastungen, insbesondere bei 3D-Abtastungen, führt, ohne daß wichtige Informationen verloren gehen.

Die gestellte Aufgabe wird durch die Verfahrensmerkmale des Patentanspruches 1 vollständig gelöst. Die Unteransprüche geben vorteilhafte Weiterbildungen bzw. Anwendungen des Verfahrens an.

Grundgedanke der Erfindung ist es, innerhalb eines zu untersuchenden Volumens jene Gebiete zu erfassen, die die geringsten zeitlichen und/oder örtlichen Änderungen und/oder auch den geringsten Informationsgehalt haben und hier die Anzahl der Abtastungen und deren Dichte auf das notwendige Maß zu beschränken. Z. B. können bei Schwangerschaftsuntersuchungen der Fruchtwasserbereich mit geringer Liniendichte und geringer Häufigkeit abgetastet werden, wobei anderseits Gebiete mit hoher Informationsdichte, z. B. Weichgewebe und Gebiete mit rascher Änderung des Bildinhaltes, z. B. durch Bewegung der Organe, häufiger und dichter abgetastet werden. Die grundsätzliche Regel wird hier die tatsächlich auftretende Bildveränderung zwischen zwei Abtastungen sein.

In der Zeichnung ist der Erfindungsgegenstand beispielsweise veranschaulicht. Es zeigt
Fig. 1 ein Blockschaltschema der zum erfindungsgemäßen Verfahren verwendeten Gesamtanordnung, wobei auf eine Darstellung der Bildauswertungseinheit sowie der Anzeigeeinheit verzichtet wurde, da es bei dem erfindungsgemäßen Verfahren im wesentlichen auf die Steuerung der Abtastzeiten und der Abtastdichte und die dafür benötigten Einheiten ankommt,
Fig. 2 zur Erläuterung des Standes der Technik eine schematische Darstellung der Abtastdichte in einem Volumen nach den bisher bekannten Verfahren und
Fig. 3 in gleicher Darstellungsweise wie Fig. 2 die beispielsweise Verteilung der Abtastdichte nach dem erfindungsgemäßen Verfahren.

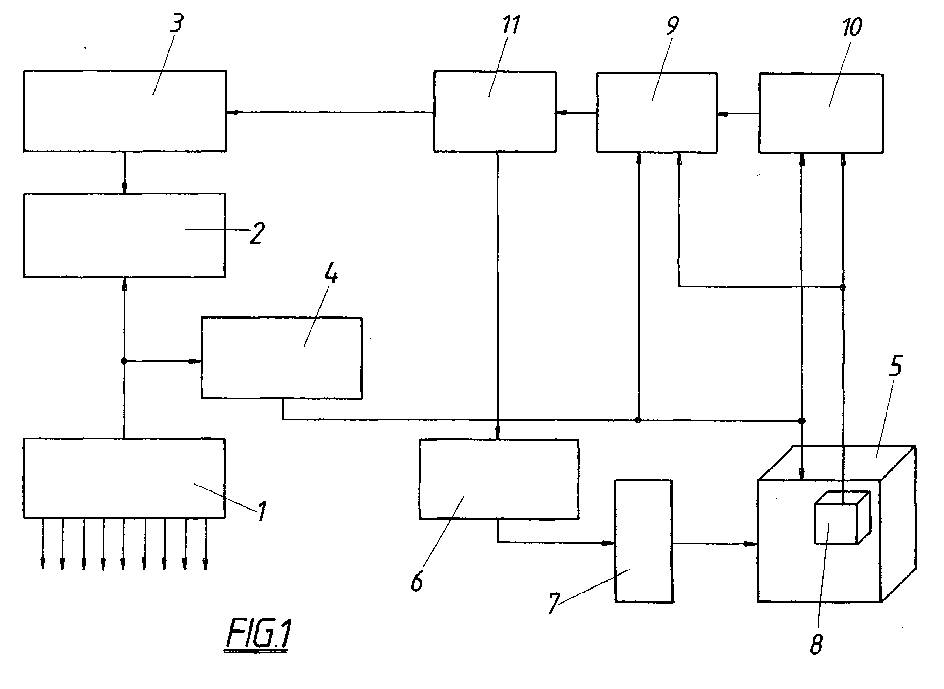

Nach Fig. 1 ist ein für die 3D-Ultraschallabtastung geeigneter Schallkopf 1 vorhanden, der von einem Ultraschallsender 2 nach Maßgabe der Steuerung durch eine Triggereinheit 3 aktiviert wird, wobei die empfangenen Echos in elektrische Signale umgewandelt und einem Ultraschallempfänger 4 zugeführt werden. In dieser Hinsicht ist die Anordnung bekannt. Es ist eine Verarbeitung der Amplitude nach dem B-Bildverfahren und eine Verarbeitung nach der Frequenz bzw. Phasenänderung (Dopplerauswertung) der Echosignale möglich, wobei im letzteren Fall Auswertungen im Bereich der Nennfrequenz und auch der harmonischen Frequenzen vorgenommen werden können. Auch Techniken, wie das parallele Ausarbeiten mehrerer Empfangskanäle bei der Ultraschallaussendung und -verarbeitung sind möglich. Die empfangenen Signale werden in einem 3D-Volumenspeicher 5 abgelegt, wobei die Ablegung von einer Positionssteuerung 6 die Informationen über den momentanen Aussendungsort der Schallstrahlen gibt und einer nachgeordneten Adressiereinheit 7 gesteuert wird. Innerhalb des gesamten Speichervolumens ist ein Volumen 8 als Volumen von Interesse dargestellt, was bedeutet, daß dieses Speichervolumen für die momentane Untersuchung von besonderem Interesse ist. In diesem Speicherbereich 8 werden beim Ausführungsbeispiel jeweils die von der letzten Abtastung stammenden Signale adressenrichtig gespeichert. Dem Speicher zugeordnet ist ein Bewegungsdetektor 9 und ein Detektor 10 für die Feinheit der Abtastung vorgesehen. Die im Speichervolumen 8 enthaltenen Daten werden vor der Einspeicherung der letzten Datenfolge gelesen und in 9, 10 mit den neu einlangenden Daten verglichen. Dieser Vergleich kann verschiedene Parameter betreffen. Bevorzugt wird einerseits verglichen, wie gut die neuen Daten mit den vorher gespeicherten Daten übereinstimmen und daraus in 9 die Bewegung detektiert und zum anderen in 10 ebenfalls verglichen, wie fein die Textur des neuen Ultraschallbildes ist. Aus diesen Daten berechnet die Rechner- und Steuereinheit, 11 die auch als Abtastkontrolle bezeichnet werden könnte, die neue Abtaststrategie.

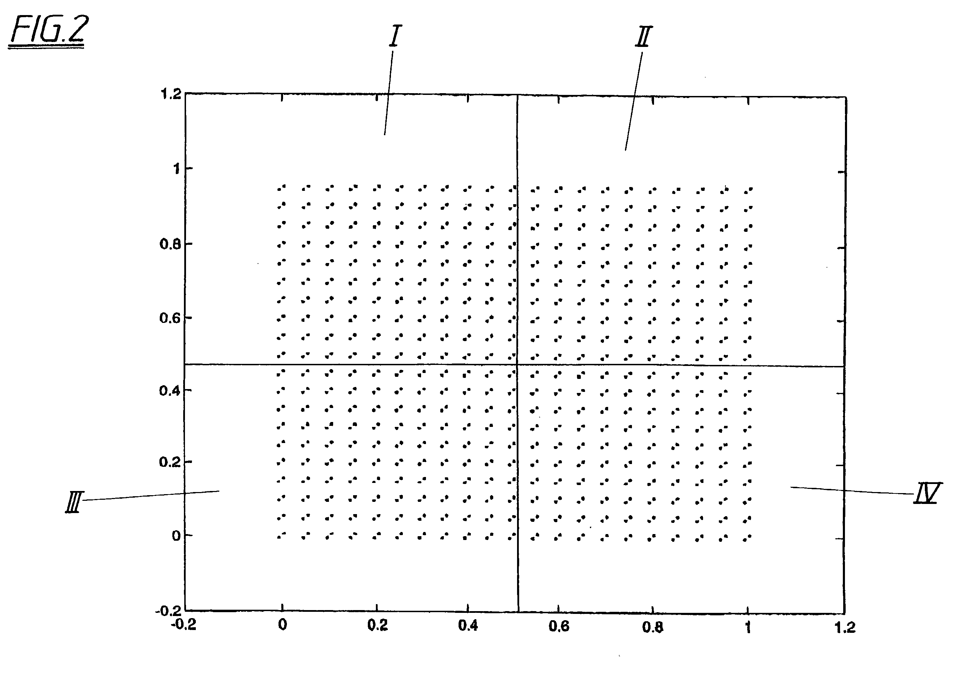

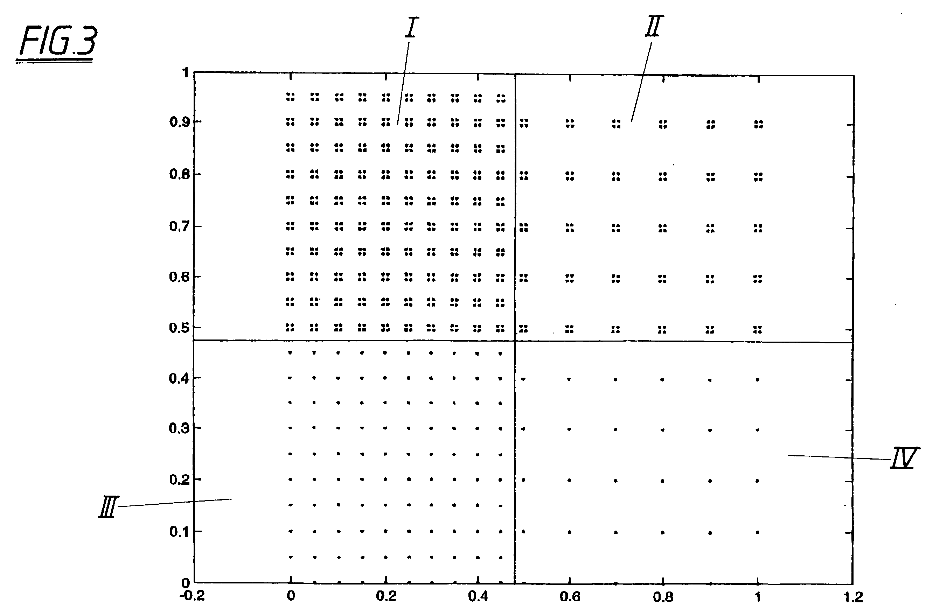

In den Fig. 2 und 3 sind zur Erleichterung des Verständnisses jeweils vier gleiche Felder eingezeichnet, wobei das Feld I einen Bereich zeigt, in dem im Volumen ein bewegtes Organ vorhanden ist, das eine hohe Auflösung zur ordnungsgemäßen Darstellung benötigt. Im Feld II sei ein bewegtes Organ angenommen, das eine niedrigere Auflösung benötigt, im Feld III ein unbewegtes Organ, das eine niedrigere Auflösung als ein bewegtes Organ, aber trotzdem eine höhere Auflösung als ein im Abtastbereich 4 befindliches unbewegtes Organ (z. B. Fruchtwasser) benötigt.

Nach dem Stand der Technik gemäß Fig. 2 sieht man, daß die als Punkte eingezeichneten Marken der Ultraschall-Abtastlinien über das gesamte Volumen gleichmäßig verteilt ist. Punkte an jeder Einzelstelle zeigen die Häufigkeit der Abtastung, d. h. die Wiederholfrequenz an. Bei der Ausführung nach dem Stand der Technik ist die Wiederholfrequenz für jeden Einzelpunkt konstant. Dagegen wird nach dem erfindungsgemäßen Verfahren gemäß Fig. 3 im Bereich I mit der höchsten Abtastfrequenz und der höchsten Abtastdichte, im Bereich II mit der höchsten Abtastfrequenz, aber wesentlich verringerter Abtastdichte, im Bereich III mit hoher Abtastdichte, aber geringer Abtastfrequenz und im Bereich IV mit geringer Abtastdichte und geringer Abtastfrequenz gearbeitet. Selbstverständlich sind die Felder I - IV nur als Verdeutlichung zu verstehen, da innerhalb eines Volumens jene Bereiche, die verschiedene Abtastdichten und verschiedene Abtastfrequenzen erfordern, nach den jeweiligen Strukturen verteilt sein werden.

## Patentansprüche

1. Verfahren zur Untersuchung von Objekten mit Ultraschall nach dem Reflexionsverfahren, insbesondere bei 3D-Abtastungen, bei dem das jeweilige Objekt mit einer für eine Volumenabtastung geeigneten Schallkopfeinheit (1) mit zugeordneter Sende-Empfangseinheit (2, 4) abgetastet und die erhaltenen Echodaten in einem Volumenspeicher (5) in eindeutiger Zuordnung zu den Ortskoordinaten der Reflexionsstellen gespeichert werden, aus welchem Speicher (5) sie nach wählbaren Abfragekriterien abgefragt und einer Auswertungseinheit, insbesondere Anzeigeeinheit zugeführt werden können, **dadurch gekennzeichnet, daß** bei der Abtastung die räumliche Liniendichte und/oder die zeitliche Wiederholungsfrequenz, in der bestimmte Volumensbereiche abgetastet werden, vom Inhalt der aus diesen Bereichen gewonnenen oder gewinnbaren Informationen in der Form abgeleitet wird, daß Bereiche mit geringerem Informationsgehalt seltener und bzw. oder mit geringerer Abtastdichte als Bereiche mit höherem Informationsgehalt abgetastet werden, zu welchem Zweck eine Rechnereinheit (9-11) vorgesehen wird, die aus von gleichen örtlichen Regionen zu verschiedenen Zeiten empfangenen Datensätzen Informationen über den Informationsgehalt dieser Datensätze bestimmt und eine Steuereinheit zur Einstellung der Wiederholungsfrequenz und bzw. oder der örtlichen Abtastdichte ansteuert, wobei die Steuereinheit die Auslösungsorte der Einzelabtastungen und deren Zeitpunkt bestimmt.

2. Verfahren nach Anspruch 1, **dadurch gekennzeichnet, daß** die zeitliche Wiederholungsfrequenz der Abtastungen für die einzelnen Volumsbereiche von der Bewegung der Echosignale im jeweiligen Volumsbereich abhängig eingestellt wird.

3. Verfahren nach Anspruch 1 oder 2, **dadurch gekennzeichnet, daß** die örtliche Abtastdichte für die einzelnen Volumsbereiche von der Feinheit der Echostruktur im jeweiligen Bereich abhängig eingestellt wird.

4. Verfahren nach Anspuch 2, **dadurch gekennzeichnet, daß** die Bewegung der Echosignale aus der Korrelation eines aus dem jeweiligen Volumsbereich aufgenommenen Datensatzes mit einem später, insbesondere aktuell aus dem gleichen Volumensbereich aufgenommenen Datensatz berechnet wird.

5. Verfahren nach Anspruch 3, **dadurch gekennzeichnet, daß** die Feinheit der Echostruktur durch eine Frequenzanalyse bestimmt wird.

6. Verfahren nach Anspruch 4, **dadurch gekennzeichnet, daß** die Datensätze vor der Durchführung der Korrelationsberechnung gefiltert werden.
